# EUROPEAN PATENT APPLICATION

(11) **EP 4 786 960 A1**
(43) Date of publication of application: **05.08.2026**
(21) Application number: 25864527.4
(22) Date of filing: 05.06.2025
(51) Int. Cl.: G01N 21/88, G01N 21/952

(54) **SECONDARY BATTERY INSPECTION DEVICE**

(30) Priority: 06.12.2024 KR 20240180157
(71) Applicant: LG ENERGY SOLUTION, LTD., Seoul 07335 (KR)
(72) Inventor: KIM, Myung Ki, Daejeon 34122 (KR); SHIM, Kyu Hun, Daejeon 34122 (KR); NOH, Yun Ji, Daejeon 34122 (KR); LEE, Jun Young, Daejeon 34122 (KR); JANG, Jun Ho, Daejeon 34122 (KR)
(74) Representative: Goddar, Heinz J.
(86) International application number: PCT/KR2025/007681
(87) International publication number: WO 2026/121431

(57) **Abstract**

The present disclosure relates to a secondary battery inspection apparatus, and more specifically, to a secondary battery inspection apparatus capable of performing an appearance inspection while reducing errors when photographing all the outer surfaces of a battery without the battery deviating from its correct position.

## Description

### TECHNICAL FIELD

### CROSS-REFERENCE TO RELATED APPLICATIONS

The present application is based on and claims priority from Korean Patent Application No. 10-2024-0180157, filed on December 6, 2024, with the Korean Intellectual Property Office, the disclosure of which is incorporated herein in its entirety by reference.

### TECHNICAL FIELD

The present disclosure relates to a secondary battery inspection apparatus, and more specifically, to a secondary battery inspection apparatus capable of performing an appearance inspection while reducing errors when photographing all the outer surfaces of a battery without the battery deviating from its correct position.

### BACKGROUND ART

In general, there are various types of a secondary battery, such as a nickel cadmium battery, a nickel hydrogen battery, a lithium-ion battery, a lithium-ion polymer battery, and a lithium metal battery. Such a secondary battery is widely used not only in small products such as smartphones, smart watches, smart rings, smart glasses, portable gaming devices, and electric bicycles, but also in large products requiring high power such as electric vehicles or hybrid vehicles, in energy storage systems (ESSs) storing surplus generated power or renewable energy, and in power storage devices for backup.

The secondary battery includes an electrode assembly formed by alternately stacking electrodes and separators, and a battery case accommodating the electrode assembly therein. Such a secondary battery is classified into a pouch type and a can type depending on the material of the battery case accommodating the electrode assembly. The pouch type accommodates the electrode assembly in a pouch type battery case made of a flexible material. And, the can type accommodates the electrode assembly in a can type battery case made of a hard material such as metal.

Once the secondary battery is manufactured, an activation process and a degassing process are performed, but during these processes, the appearance of the can type battery case may be deformed or damaged. Therefore, it is necessary to perform an appearance inspection process of the secondary battery.

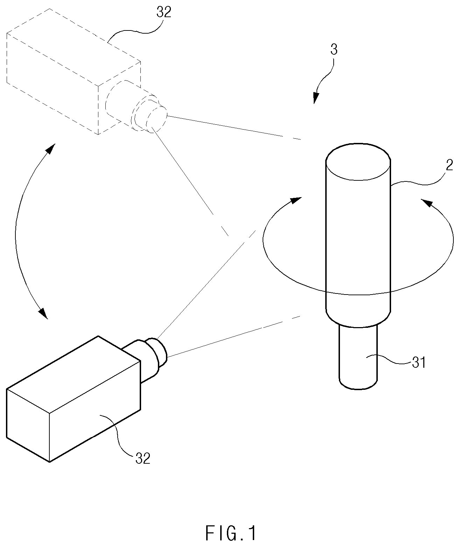

FIG. 1 is a perspective view of a conventional secondary battery inspection apparatus 3.

Among the methods for inspecting the appearance of secondary batteries, there is a vision inspection method that inspects for defects by analyzing images generated by photographing the battery with a camera. However, conventionally as illustrated in FIG. 1, the pusher 31 in which the battery 2 is seated on the upper surface thereof performs rotational reciprocating motion with its central axis as the rotation axis, and the camera 32 positioned around the battery 2 also performs rotational reciprocating motion with the central axis of the pusher as the rotation axis. As a result, the entire outer surface of the battery 2 is photographed to perform an appearance inspection process. However, the battery 2 that is seated on the upper surface of the pusher 31 is not fixed to the pusher 31. Therefore, when the pusher 31 performs rotational reciprocating motion, a slip phenomenon occurs in which the battery 2 gradually slides on the upper surface of the pusher 31 due to inertia. Accordingly, the battery 2 deviates from its correct position, and thus when a plurality of images are generated by photographing the entire outer surface of the battery 2, there is a problem of errors occurring with respect to the actual appearance.

Additionally, when the pusher 31 and the camera 32 perform rotational reciprocating motion, there is a problem that the pusher 31 or the camera 32 does not reach the designated position and returns while performing an appearance inspection on numerous batteries 2.

To solve this problem, a method of fixing the battery by attaching a magnet to the pusher may be considered, but even in this case, there is still a problem of slipping when the rotation speed of the pusher increases.

A method of stopping the battery and then rotating the camera around the battery once may also be considered. However, in general, a plurality of batteries are arranged in a row and move continuously when undergoing various processes. The appearance inspection process is also performed when the batteries moving continuously are positioned one after another in a specific area, but since the plurality of batteries should all stop each time the camera rotates around the battery, there is a problem that a significant amount of time is required to perform an appearance inspection on numerous batteries in sequence.

A method of installing a plurality of cameras on both sides of the battery may also be considered. That is, it is also possible to consider a method in which two cameras are installed on both sides of the path where the plurality of batteries are arranged in a row and move, facing each other, and then the two cameras simultaneously take pictures each time the batteries pass through the path one after another. However, in this case, the lighting interferes with each other's cameras to generate backlit images, resulting in a problem that the appearance of the battery shown in the images is not clear.

### SUMMARY

### TECHNICAL PROBLEM

The present disclosure is directed to providing a secondary battery inspection apparatus capable of performing an appearance inspection while reducing errors when photographing all the outer surfaces of a battery without the battery deviating from its correct position.

The technical problems of the present disclosure are not limited to the above-described problems, and other problems not mentioned herein may be clearly understood by those skilled in the art from the following description of the present disclosure.

### TECHNICAL SOLUTION

A secondary battery inspection apparatus according to embodiments of the present disclosure for solving the above-described problems includes a first rotating part in which a plurality of outer grippers gripping a battery thereoutside are formed facing outward at equal intervals along an outer circumferential surface; a second rotating part in which a plurality of inner grippers gripping the battery thereinside are formed facing inward at equal intervals along an inner circumferential surface; a shaft that positions the first rotating part and the second rotating part at different heights; a plurality of pushers that move upward and downward to raise and lower the battery; a first camera that is positioned outside the first rotating part, faces one of the outer grippers, and photographs the battery gripped by the outer gripper to generate a first image; and a second camera that is positioned inside the second rotating part, faces one of the inner grippers, and photographs the battery gripped by the inner gripper to generate a second image, wherein the first rotating part, the second rotating part, and the shaft all share the same central axis, which becomes a rotation axis, and rotate around the rotation axis, and the plurality of pushers rotate around the rotation axis together with the first rotating part, the second rotating part, and the shaft.

Additionally, the first rotating part, the second rotating part, the shaft, and the pusher may rotate at the same angular velocity.

Additionally, the plurality of outer grippers, the plurality of inner grippers, and the plurality of pushers may all be the same in number.

Additionally, the plurality of outer grippers, the plurality of inner grippers, and the plurality of pushers may all correspond to each other in positions.

Additionally, the first rotating part may be positioned below the second rotating part.

Additionally, when a first battery among the plurality of batteries is seated on an upper surface of a first pusher among the plurality of pushers, and a first outer gripper among the plurality of outer grippers grips the first battery outside the first rotating part, the first camera may be configured to photograph the first battery to generate a first image.

Additionally, when the first camera generates the first image of the first battery, the first pusher may be configured to rotate around the rotation axis and raise the first battery toward a first inner gripper among the plurality of inner grippers.

Additionally, when the first inner gripper grips the first battery, the second rotating part may be configured to rotate until the first battery reaches a position where the second camera faces.

Additionally, when the first battery reaches the position where the second camera faces, the second camera may be configured to photograph the first battery to generate a second image.

Additionally, when the first pusher raises the first battery, a second battery among the plurality of batteries may be seated on an upper surface of a second pusher among the plurality of pushers, and a second outer gripper among the plurality of outer grippers may grip the second battery.

Additionally, the second rotating part may be positioned below the first rotating part.

Additionally, when a first battery among the plurality of batteries is seated on an upper surface of a first pusher among the plurality of pushers, and the first inner gripper among the plurality of inner grippers grips the first battery inside the second rotating part, the second camera may be configured to photograph the first battery to generate a second image.

Additionally, when the second camera generates the second image of the first battery, the first pusher may be configured to rotate around the rotation axis and raise the first battery toward the first outer gripper among the plurality of outer grippers.

Additionally, when the first outer gripper grips the first battery, the first rotating part may be configured to rotate until the first battery reaches a position where the first camera faces.

Additionally, when the first battery reaches the position where the first camera faces, the first camera may be configured to photograph the first battery to generate a first image.

Additionally, when the first pusher raises the first battery, a second battery among the plurality of batteries may be seated on an upper surface of a second pusher among the plurality of pushers, and a second inner gripper among the plurality of inner grippers may grip the second battery.

Other specific details of the present disclosure are included in the detailed description and drawings.

### ADVANTAGEOUS EFFECTS

According to embodiments of the present disclosure, at least the following effects are obtained.

When performing an appearance inspection of secondary batteries, the batteries do not deviate from their correct positions, and thus if all the outer surfaces of the batteries are photographed to generate images, an error from the actual appearance may be reduced.

Additionally, the appearance inspection of a plurality of batteries may be performed quickly, thereby saving the appearance inspection time.

The effects according to the present disclosure are not limited by the contents exemplified above, and more various effects are included in this specification.

### BRIEF DESCRIPTION OF THE DRAWINGS

FIG. 1 is a perspective view of a conventional secondary battery inspection apparatus 3.
FIG. 2 is a perspective view showing a first battery 21 gripped by a first outer gripper 1111 of a first rotating part 11 in a secondary battery inspection apparatus 1 according to an embodiment of the present disclosure.
FIG. 3 is a schematic view showing the appearance of FIG. 2 from above the first rotating part 11.
FIG. 4 is a perspective view showing a first pusher 141 raising the first battery 21 in the secondary battery inspection apparatus 1 according to an embodiment of the present disclosure.
FIG. 5 is a perspective view showing the first battery 21 gripped by a first inner gripper 1211 of a second rotating part 12 in the secondary battery inspection apparatus 1 according to an embodiment of the present disclosure.
FIG. 6 is a schematic view showing the appearance of FIG. 5 from above the second rotating part 12.
FIG. 7 is a perspective view showing the second rotating part 12 rotating while the first inner gripper 1211 grips the first battery 21 in the secondary battery inspection apparatus 1 according to an embodiment of the present disclosure.
FIG. 8 is a perspective view showing the first battery 21 reaching a position where a second camera 16 faces in the secondary battery inspection apparatus 1 according to an embodiment of the present disclosure.
FIG. 9 is a schematic view showing the appearance of FIG. 8 from above the second rotating part 12.
FIG. 10 is a perspective view showing the first pusher 141 lowering the first battery 21 in the secondary battery inspection apparatus 1 according to an embodiment of the present disclosure.
FIG. 11 is a perspective view showing the first battery 21 gripped again by the first outer gripper 1111 of the first rotating part 11 in the secondary battery inspection apparatus 1 according to an embodiment of the present disclosure.
FIG. 12 is a perspective view showing a secondary battery inspection apparatus 1a according to a modified example of an embodiment of the present disclosure.
FIG. 13 is a perspective view showing the first battery 21 gripped by a first inner gripper 1211b of a second rotating part 12b in a secondary battery inspection apparatus 1b according to another embodiment of the present disclosure.
FIG. 14 is a schematic view showing the appearance of FIG. 13 from above the second rotating part 12b.
FIG. 15 is a perspective view showing a first pusher 141b raising the first battery 21 in the secondary battery inspection apparatus 1b according to another embodiment of the present disclosure.
FIG. 16 is a perspective view showing the first battery 21 gripped by a first outer gripper 1111b of a first rotating part 11b in the secondary battery inspection apparatus 1b according to another embodiment of the present disclosure.
FIG. 17 is a schematic view showing the appearance of FIG. 16 from above the first rotating part 11b.
FIG. 18 is a perspective view showing the first rotating part 11b rotating while the first outer gripper 1111b grips the first battery 21 in the secondary battery inspection apparatus 1b according to another embodiment of the present disclosure.
FIG. 19 is a perspective view showing the first battery 21 reaching a position where a first camera 15b faces in the secondary battery inspection apparatus 1b according to another embodiment of the present disclosure.
FIG. 20 is a schematic view showing the appearance of FIG. 19 from above the first rotating part 11b.
FIG. 21 is a perspective view showing the first pusher 141b lowering the first battery 21 in the secondary battery inspection apparatus 1b according to another embodiment of the present disclosure.
FIG. 22 is a perspective view showing the first battery 21 gripped again by the first inner gripper 1211b of the second rotating part 12b in the secondary battery inspection apparatus 1b according to another embodiment of the present disclosure.

### DETAILED DESCRIPTION

The advantages and features of the present disclosure, and the methods for achieving them, will become clear by referring to the embodiments described in detail below with the accompanying drawings. However, the present disclosure is not limited to the embodiments disclosed below, but may be implemented in various different forms, and the present embodiments are provided only to make the disclosure of the present invention complete and to fully inform those having ordinary skill in the art to which the present disclosure pertains of the scope of the disclosure, and the present disclosure is defined only by the scope of the claims. Throughout the specification, the same reference numerals refer to the same components.

Unless otherwise defined, all terms (including technical and scientific terms) used in this specification may be used in a sense that can be commonly understood by those having ordinary skill in the art to which the present disclosure pertains. Additionally, terms defined in commonly used dictionaries are not to be ideally or excessively interpreted unless explicitly and specifically defined.

The terms used in this specification are for the purpose of describing the embodiments and are not intended to limit the present disclosure. In this specification, the singular form includes the plural form unless specifically otherwise stated in the phrase. The terms "comprises" and/or "comprising" used in the specification do not exclude the presence or addition of one or more other components in addition to the components mentioned.

Hereinafter, preferred embodiments of the present disclosure will be described in detail with reference to the accompanying drawings.

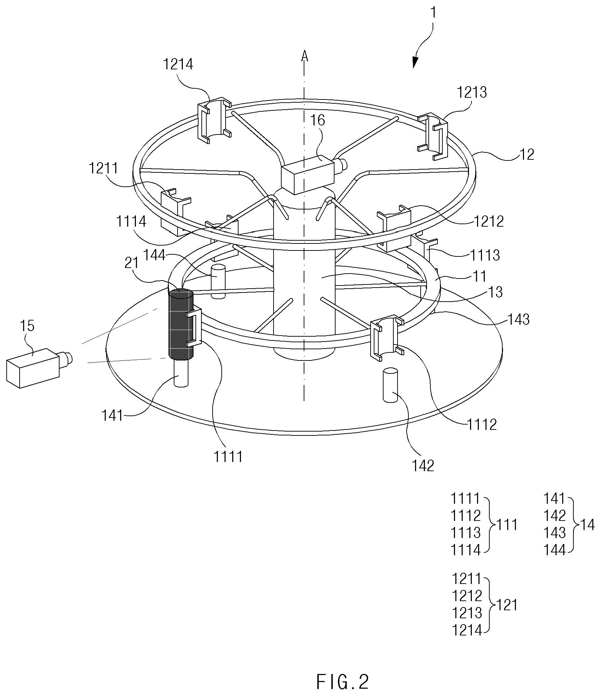

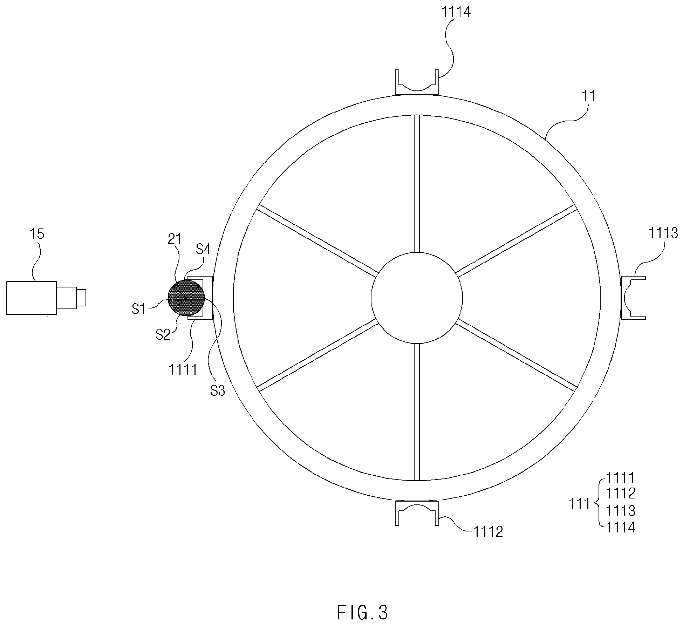

FIG. 2 is a perspective view showing a first battery 21 gripped by a first outer gripper 1111 of a first rotating part 11 in a secondary battery inspection apparatus 1 according to an embodiment of the present disclosure, and FIG. 3 is a schematic view showing the appearance of FIG. 2 from above the first rotating part 11.

A secondary battery inspection apparatus 1 according to the present disclosure includes a first rotating part 11 in which a plurality of outer grippers 111 gripping a battery 2 thereoutside are formed facing outward at equal intervals along the outer circumferential surface; a second rotating part 12 in which a plurality of inner grippers 121 gripping the battery 2 thereinside are formed facing inward at equal intervals along the inner circumferential surface; a shaft 13 that positions the first rotating part 11 and the second rotating part 12 at different heights; a plurality of pushers 14 that move upward and downward to raise and lower the battery 2; a first camera 15 that is positioned outside the first rotating part 11, faces one of the outer grippers 111, and photographs the battery 2 gripped by the outer gripper 111 to generate a first image; and a second camera 16 that is positioned inside the second rotating part 12, faces one of the inner grippers 121, and photographs the battery 2 gripped by the inner gripper 121 to generate a second image, wherein the first rotating part 11, the second rotating part 12, and the shaft 13 all share the same central axis, which becomes a rotation axis A, and rotate around the rotation axis A, and the plurality of pushers 14 rotate around the rotation axis A together with the first rotating part 11, the second rotating part 12, and the shaft 13.

According to an embodiment of the present disclosure, as illustrated in FIG. 2, the first rotating part 11 is positioned below the second rotating part 12, and the second rotating part 12 is positioned above the first rotating part 11. And, the first camera 15 photographs the battery 2 while the outer gripper 111 formed on the first rotating part 11 grips the battery 2. Thereafter, the pusher 14 raises the battery 2, and the second camera 16 photographs the battery 2 while the inner gripper 121 formed on the second rotating part 12 grips the battery 2. As a result, the photographing of all the outer surfaces of the battery 2 may be completed.

In the secondary battery inspection apparatus 1 according to the present disclosure, a plurality of outer grippers 111 are formed facing outward at equal intervals along the outer circumferential surface of the first rotating part 11. And, the battery 2 is gripped outside the first rotating part 11. To this end, the outer gripper 111 may have a U-shape when viewed from above, and the distance between both ends may be equal to or slightly larger than the diameter of the battery 2 so that the battery 2 is inserted. As a result, the battery 2 does not deviate from its correct position, and the plurality of batteries 2 may all be positioned at a certain position to perform an appearance inspection. However, the present disclosure is not limited thereto, and the outer gripper 111 may have various shapes as long as the plurality of batteries 2 may all be positioned at a certain position.

The outer gripper 111 does not grip or adhere to the battery 2 with strong force, but rather, the battery 2 is inserted into the outer gripper 111 and the battery 2 is gripped in place by weak frictional force. As a result, when the pusher 14 moves the battery 2 later, the battery 2 may easily come out of the outer gripper 111.

The plurality of batteries 2 are positioned one after another in a specific area at regular intervals while moving. And, whenever the first rotating part 11 rotates, the plurality of outer grippers 111 grip each of the batteries 2 positioned one after another. Therefore, in order for the plurality of outer grippers 111 to reach the specific area where the batteries 2 are positioned whenever the first rotating part 11 rotates, the first rotating part 11 is preferably formed in a ring shape or a disk shape with a constant outer circumferential surface.

A plurality of inner grippers 121 are formed facing inward at equal intervals along the inner circumferential surface of the second rotating part 12. And, the battery 2 is gripped inside the second rotating part 12. To this end, the inner gripper 121 may have a U-shape when viewed from above, and the distance between both ends may be equal to or slightly larger than the diameter of the battery 2 so that the battery 2 is inserted. As a result, the battery 2 does not deviate from its correct position, and the plurality of batteries 2 may all be positioned at a certain position to perform an appearance inspection. However, the present disclosure is not limited thereto, and the inner gripper 121 may have various shapes as long as the plurality of batteries 2 may all be positioned at a certain position.

The inner gripper 121 does not grip or adhere to the battery 2 with strong force, but rather, the battery 2 is inserted into the inner gripper 121 and the battery 2 is gripped in place by weak frictional force. As a result, when the pusher 14 moves the battery 2 later, the battery 2 may easily come out of the inner gripper 121.

The plurality of batteries 2 are positioned one after another in a specific area at regular intervals while moving. And, whenever the second rotating part 12 rotates, the plurality of inner grippers 121 grip each of the batteries 2 positioned one after another. Therefore, in order for the plurality of inner grippers 121 to reach the specific area where the batteries 2 are positioned whenever the second rotating part 12 rotates, the second rotating part 12 is preferably formed in a ring shape with a constant inner circumferential surface. In particular, since there is an empty space inside the second rotating part 12, the inner gripper 121, the battery 2, and the second camera 16 may be positioned in this empty space.

The shaft 13 positions the first rotating part 11 and the second rotating part 12 at different heights. According to an embodiment of the present disclosure, the shaft 13 may have a cylindrical shape that is formed long upward. And, the first rotating part 11 is positioned below the second rotating part 12, and the second rotating part 12 is positioned above the first rotating part 11. The first rotating part 11 and the second rotating part 12 are fixed to the shaft 13 and rotate together as the shaft 13 rotates.

The first rotating part 11, the second rotating part 12, and the shaft 13 all share the same central axis. And, this central axis becomes a rotation axis A, and they all rotate around the same rotation axis A. At this time, the first rotating part 11 and the second rotating part 12 are fixed to the shaft 13 and rotate together, so that the first rotating part 11, the second rotating part 12, and the shaft 13 all rotate at the same angular velocity.

The pusher 14 moves upward and downward to raise and lower the battery 2. According to an embodiment of the present disclosure, the battery 2 is gripped by the outer gripper 111 of the first rotating part 11 while being seated on the upper surface of the pusher 14. And, when the pusher 14 moves upward, the battery 2 comes out of the outer gripper 111, is raised by the pusher 14, and is gripped by the inner gripper 121 of the second rotating part 12. And, when the pusher 14 moves downward, the battery 2 comes out of the inner gripper 121 and is lowered by the pusher 14.

The pushers 14 are formed in plurality and are formed at equal intervals along the periphery of the first rotating part 11, the second rotating part 12, and the shaft 13. And, a plurality of batteries 2 are seated on the upper surface of each pusher 14 one by one at regular intervals. These plurality of pushers 14 rotate around the same rotation axis A together with the first rotating part 11, the second rotating part 12, and the shaft 13. And, the first rotating part 11, the second rotating part 12, the shaft 13, and the plurality of pushers 14 rotate at the same angular velocity.

The plurality of outer grippers 111 of the first rotating part 11, the plurality of inner grippers 121 of the second rotating part 12, and the plurality of pushers 14 are all the same in number, and all correspond to each other in their positions. Therefore, whenever the pusher 14 moves upward or downward, the battery 2 seated on the upper surface of the pusher 14 may ascend or descend between the outer gripper 111 and the inner gripper 121.

The first camera 15 is positioned outside the first rotating part 11 and faces one outer gripper 111. And, it photographs the battery 2 gripped by the outer gripper 111 of the first rotating part 11 to generate a first image. While the first rotating part 11, the second rotating part 12, the shaft 13, and the plurality of pushers 14 rotate around the rotation axis A, the first camera 15 does not rotate. And, when one of the plurality of outer grippers 111 is positioned at a position where the first camera 15 faces while the first rotating part 11 rotates, the first camera 15 photographs one battery 2 gripped by one outer gripper 111. At least one mirror (not shown) may be disposed around the battery 2, and the mirror may be positioned to be inclined at a specific angle with respect to the first camera 15. In particular, in order not to interfere with a path where the first rotating part 11 rotates, two mirrors may be disposed symmetrically on both sides of the battery 2, while being spaced apart from the battery 2 at a certain distance. As a result, the first side S1, a portion of the second side S2, and a portion of the fourth side S4 of the battery 2 are shown in the resulting first image.

The second camera 16 is positioned inside the second rotating part 12 and faces one inner gripper 121. And, it photographs the battery 2 gripped by the inner gripper 121 of the second rotating part 12 to generate a second image. While the first rotating part 11, the second rotating part 12, the shaft 13, and the plurality of pushers 14 rotate around the rotation axis A, the second camera 16 does not rotate. And, when one of the plurality of inner grippers 121 is positioned at a position where the second camera 16 faces while the second rotating part 12 rotates, the second camera 16 photographs one battery 2 gripped by one inner gripper 121. At least one mirror (not shown) may be disposed around the battery 2, and the mirror may be positioned to be inclined at a specific angle with respect to the second camera 16. In particular, in order not to interfere with a path where the second rotating part 12 rotates, four mirrors may be disposed symmetrically on the upper and lower parts of both sides of the battery 2, respectively. As a result, the third side S3, a portion of the second side S2, and a portion of the fourth side S4 of the battery 2 are shown in the resulting second image.

The first image and the second image generated by the first camera 15 and the second camera 16, respectively, may be still photographs, but may be moving videos without being limited thereto.

Hereinafter, the operation of the secondary battery inspection apparatus 1 according to an embodiment of the present disclosure will be described in order with reference to each drawing. The plurality of outer grippers 111, the plurality of inner grippers 121, and the plurality of pushers 14 are described as being each formed in four, but the present disclosure is not limited thereto, and if the plurality of outer grippers 111, the plurality of inner grippers 121, and the plurality of pushers 14 are all the same in number, they may be formed in various numbers, such as eight or twelve.

As illustrated in FIG. 2, the first battery 21 among the plurality of batteries 2 is seated on the upper surface of the first pusher 141 among the plurality of pushers 14. And, as illustrated in FIGS. 2 and 3, the first outer gripper 1111 among the plurality of outer grippers 111 grips the first battery 21 outside the first rotating part 11. Then, the first camera 15 photographs the first battery 21 to generate a first image of the first battery 21. As described above, at least one mirror (not shown) may be disposed around the first battery 21, and the mirror may be disposed to be inclined at a specific angle with respect to the first camera 15. Therefore, the first side S1, a portion of the second side S2, and a portion of the fourth side S4 of the first battery 21 may be shown in the first image.

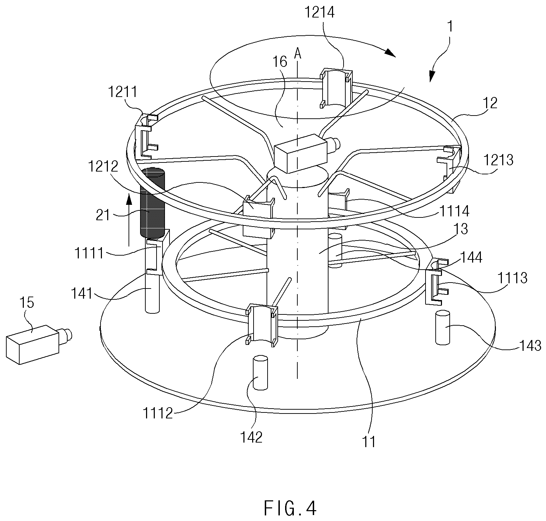

FIG. 4 is a perspective view showing a first pusher 141 raising the first battery 21 in the secondary battery inspection apparatus 1 according to an embodiment of the present disclosure.

When the first camera 15 generates the first image of the first battery 21, the first pusher 141 moves upward as illustrated in FIG. 4. At this time, the first rotating part 11, the second rotating part 12, the shaft 13, and the plurality of pushers 14 all rotate at the same angular velocity around the same rotation axis A. Therefore, the first pusher 141 simultaneously moves upward and rotates around the rotation axis A to raise the first battery 21 seated on the upper surface thereof, and the first battery 21 comes out of the first outer gripper 1111 and is raised by the first pusher 141.

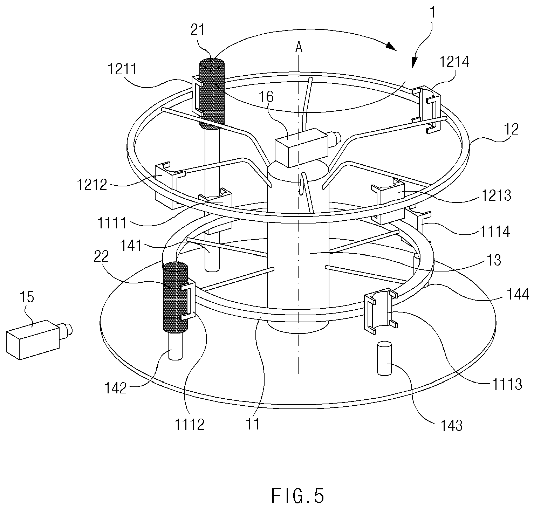

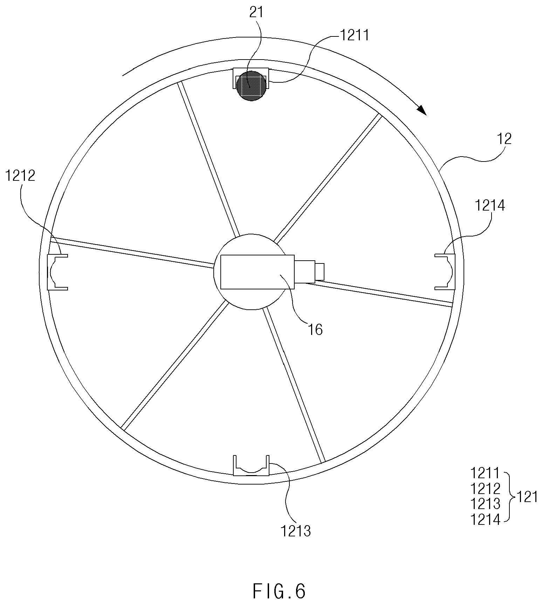

FIG. 5 is a perspective view showing the first battery 21 gripped by a first inner gripper 1211 of a second rotating part 12 in the secondary battery inspection apparatus 1 according to an embodiment of the present disclosure, and FIG. 6 is a schematic view showing the appearance of FIG. 5 from above the second rotating part 12.

The plurality of outer grippers 111, the plurality of inner grippers 121, and the plurality of pushers 14 are all the same in number, and all correspond to each other in their positions. Therefore, when the first pusher 141 moves upward, the first battery 21 comes out of the first outer gripper 1111 and ascends toward the first inner gripper 1211 among the plurality of inner grippers 121. And, when the first battery 21 reaches the second rotating part 12, the first inner gripper 1211 of the second rotating part 12 grips the first battery 21 inside the second rotating part 12 as illustrated in FIGS. 5 and 6.

FIGS. 5 and 6 illustrate that the first inner gripper 1211 grips the first battery 21 when the first rotating part 11, the second rotating part 12, the shaft 13, and the plurality of pushers 14 rotate 90°. However, the position at which the first inner gripper 1211 grips the first battery 21 may vary depending on the ascending speed of the pusher 14. That is, if the ascending speed of the pusher 14 is faster, the first inner gripper 1211 may grip the first battery 21 when the first rotating part 11, the second rotating part 12, the shaft 13, and the plurality of pushers 14 rotate at an angle less than 90°, and conversely, if the ascending speed of the pusher 14 is slower, the first inner gripper 1211 may grip the first battery 21 when the first rotating part 11, the second rotating part 12, the shaft 13, and the plurality of pushers 14 rotate at an angle greater than 90°.

Meanwhile, when the first pusher 141 raises the first battery 21, the second battery 22 among the plurality of batteries 2 is seated on the upper surface of the second pusher 142 among the plurality of pushers 14 as illustrated in FIG. 5. And, the second outer gripper 1112 among the plurality of outer grippers 111 grips the second battery 22 outside the first rotating part 11. Then, the first camera 15 photographs the second battery 22 to generate a first image of the second battery 22.

As described above, the plurality of outer grippers 111, the plurality of inner grippers 121, and the plurality of pushers 14 are all the same in number, all correspond to each other in their positions, and are formed at equal intervals. If the plurality of outer grippers 111, the plurality of inner grippers 121, and the plurality of pushers 14 are each formed in four, the plurality of outer grippers 111, the plurality of inner grippers 121, and the plurality of pushers 14 are each formed at 90° intervals based on the central axis. Then, whenever the first rotating part 11, the second rotating part 12, the shaft 13, and the plurality of pushers 14 rotate 90°, the plurality of outer grippers 111 may be positioned alternately with each other. And, the plurality of batteries 2 are positioned one after another in a specific area at regular intervals while moving. Therefore, when the first outer gripper 1111 grips the first battery 21, and then the first rotating part 11, the second rotating part 12, the shaft 13, and the plurality of pushers 14 rotate 90°, the second battery 22 may be seated on the upper surface of the second pusher 142, and the second outer gripper 1112 may grip the second battery 22 outside the first rotating part 11. That is, whenever the first rotating part 11, the second rotating part 12, the shaft 13, and the plurality of pushers 14 rotate 90°, new batteries 2 may be seated one by one on the upper surface of the pusher 14, and one outer gripper 111 may grip the batteries 2 one by one.

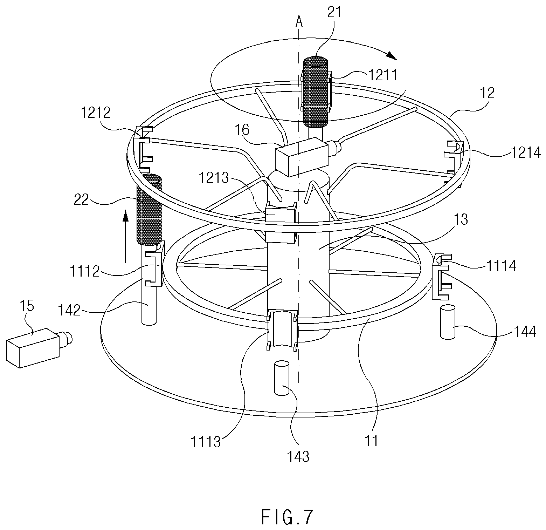

FIG. 7 is a perspective view showing the second rotating part 12 rotating while the first inner gripper 1211 grips the first battery 21 in the secondary battery inspection apparatus 1 according to an embodiment of the present disclosure.

As illustrated in FIG. 7, when the first inner gripper 1211 grips the first battery 21, the second rotating part 12 rotates until the first battery 21 reaches the position where the second camera 16 faces. At this time, the first pusher 141 does not move upward or downward, but rotates together with the first battery 21 while it is seated. Then, the first battery 21 may move toward the position where the second camera 16 faces without changing the height thereof.

Meanwhile, when the first camera 15 generates the first image of the second battery 22, the second pusher 142 moves upward as illustrated in FIG. 7. And, the second pusher 142 simultaneously moves upward and rotates around the rotation axis A to raise the second battery 22 seated on the upper surface thereof, and the second battery 22 comes out of the second outer gripper 1112 and is raised by the second pusher 142.

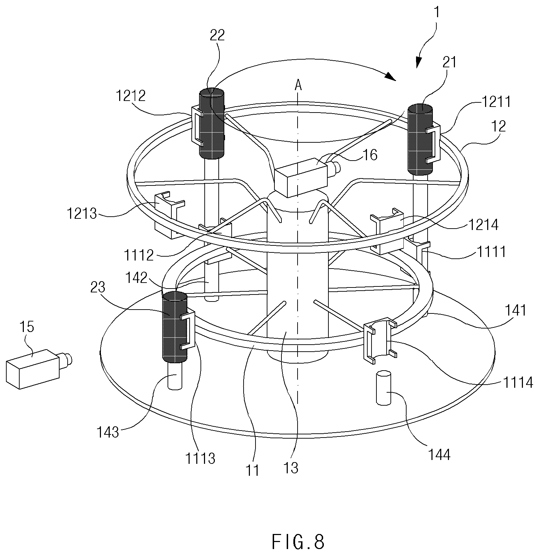

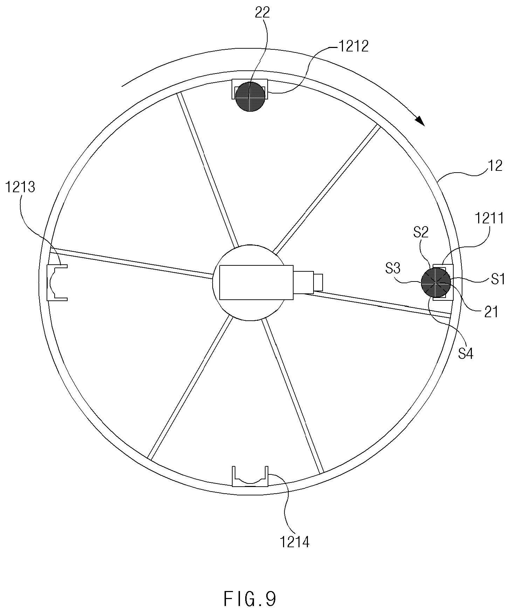

FIG. 8 is a perspective view showing the first battery 21 reaching a position where a second camera 16 faces in the secondary battery inspection apparatus 1 according to an embodiment of the present disclosure, and FIG. 9 is a schematic view showing the appearance of FIG. 8 from above the second rotating part 12.

As illustrated in FIGS. 8 and 9, when the second rotating part 12 further rotates while the first inner gripper 1211 grips the first battery 21 and the first battery 21 reaches the position where the second camera 16 faces, the second camera 16 photographs the first battery 21 to generate the second image of the first battery 21. Although FIG. 8 illustrates that the second camera 16 is disposed above the shaft 13, the shaft 13 and the second camera 16 are not fixed to each other. That is, if a separate upper cover (not shown) covers the secondary battery inspection apparatus 1 from above, the second camera 16 may be fixed to the upper cover. Therefore, while the first rotating part 11, the second rotating part 12, the shaft 13, and the plurality of pushers 14 rotate around the rotation axis A, the second camera 16 does not rotate. Additionally, as described above, at least one mirror (not shown) may be disposed around the first battery 21, and the mirror may be disposed to be inclined at a specific angle with respect to the second camera 16. Therefore, the third side S3, a portion of the second side S2, and a portion of the fourth side S4 of the first battery 21 are shown in the second image.

When the first image and the second image of the first battery 21 are generated, the first side S1, the second side S2, the third side S3, and the fourth side S4 of the first battery 21 are all shown in the first image and the second image. Therefore, through the first image and the second image of the first battery 21, it is possible to perform an appearance inspection of all the outer surfaces of the first battery 21 and determine whether there are any defects.

Meanwhile, when the second pusher 142 moves upward, the second battery 22 comes out of the second outer gripper 1112 and ascends toward the second inner gripper 1212 among the plurality of inner grippers 121. And, when the second battery 22 reaches the second rotating part 12, the second inner gripper 1212 of the second rotating part 12 grips the second battery 22 inside the second rotating part 12 as illustrated in FIGS. 8 and 9.

As described above, if the plurality of outer grippers 111, the plurality of inner grippers 121, and the plurality of pushers 14 are each formed in four, the plurality of outer grippers 111, the plurality of inner grippers 121, and the plurality of pushers 14 are each formed at 90° intervals based on the central axis. Then, whenever the first rotating part 11, the second rotating part 12, the shaft 13, and the plurality of pushers 14 rotate 90°, the plurality of inner grippers 112 may be positioned alternately with each other. Therefore, when the first inner gripper 1211 grips the first battery 21, and then the first rotating part 11, the second rotating part 12, the shaft 13, and the plurality of pushers 14 rotate 90°, the second battery 22 ascends to reach the second rotating part 12, and the second inner gripper 1212 may grip the second battery 22 inside the second rotating part 12. That is, whenever the first rotating part 11, the second rotating part 12, the shaft 13, and the plurality of pushers 14 rotate 90°, the batteries 2 may ascend one by one to reach the second rotating part 12, and one inner gripper 121 may grip the batteries 2 one by one.

Meanwhile, when the second pusher 142 raises the second battery 22, the third battery 23 among the plurality of batteries 2 is seated on the upper surface of the third pusher 143 among the plurality of pushers 14 as illustrated in FIG. 8. And, the third outer gripper 1113 among the plurality of outer grippers 111 grips the third battery 23 outside the first rotating part 11. Then, the first camera 15 photographs the third battery 23 to generate a first image of the third battery 23.

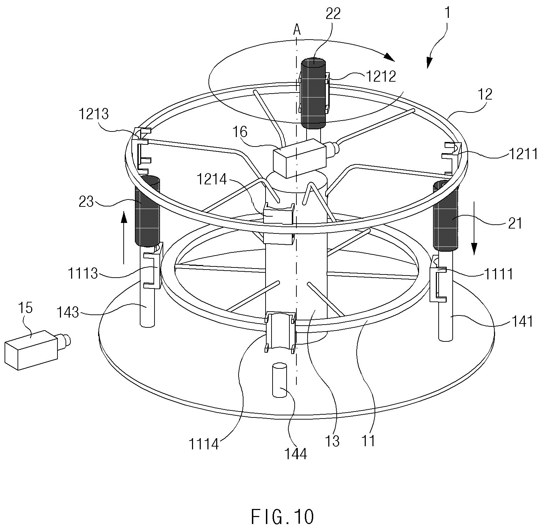

FIG. 10 is a perspective view showing the first pusher 141 lowering the first battery 21 in the secondary battery inspection apparatus 1 according to an embodiment of the present disclosure.

When the second camera 16 generates the second image of the first battery 21, the first pusher 141 moves downward as illustrated in FIG. 10. At this time, the first pusher 141 simultaneously moves downward and rotates around the rotation axis A to lower the first battery 21 seated on the upper surface thereof, and the first battery 21 comes out of the first inner gripper 1211 and is lowered by the pusher 14.

Meanwhile, when the second inner gripper 1212 grips the second battery 22, the second rotating part 12 rotates until the second battery 22 reaches the position where the second camera 16 faces. At this time, the second pusher 142 does not move upward or downward, but rotates together with the second battery 22 while it is seated. Then, the second battery 22 may move toward the position where the second camera 16 faces without changing the height thereof.

Meanwhile, when the first camera 15 generates the first image of the third battery 23, the third pusher 143 moves upward as illustrated in FIG. 10. And, the third pusher 143 simultaneously moves upward and rotates around the rotation axis A to raise the third battery 23 seated on the upper surface thereof, and the third battery 23 comes out of the third outer gripper 1113 and is raised by the third pusher 143.

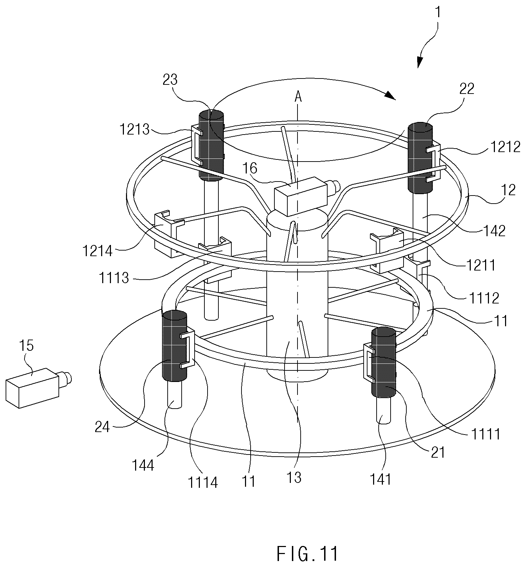

FIG. 11 is a perspective view showing the first battery 21 gripped again by the first outer gripper 1111 of the first rotating part 11 in the secondary battery inspection apparatus 1 according to an embodiment of the present disclosure.

When the first pusher 141 moves downward, the first battery 21 descends toward the first outer gripper 1111 of the first rotating part 11 as illustrated in FIG. 11. And, when the first battery 21 reaches the first rotating part 11 again, the first outer gripper 1111 grips the first battery 21 again. When the first pusher 141 moves further downward, the first battery 21 comes out of the first outer gripper 1111 again, and the appearance inspection process for the first battery 21 is completed. And, the first battery 21 is moved to the next process line. In the next process, a plurality of batteries 2 may be sorted into good or defective products depending on whether they are defective. Therefore, the first battery 21 may also be sorted into good or defective products depending on whether they are defective as determined through the first image and the second image.

Meanwhile, when the second rotating part 12 further rotates while the second inner gripper 1212 grips the second battery 22 and the second battery 22 reaches the position where the second camera 16 faces, the second camera 16 photographs the second battery 22 to generate the second image of the second battery 22.

When the first image and the second image of the second battery 22 are generated, the first side S1, the second side S2, the third side S3, and the fourth side S4 of the second battery 22 are all shown in the first image and the second image. Therefore, through the first image and the second image of the second battery 22, it is possible to perform an appearance inspection of all the outer surfaces of the second battery 22 and determine whether there are any defects.

Meanwhile, when the third pusher 143 moves upward, the third battery 23 comes out of the third outer gripper 1113 and ascends toward the third inner gripper 1213 among the plurality of inner grippers 121. And, when the third battery 23 reaches the second rotating part 12, the third inner gripper 1213 of the second rotating part 12 grips the third battery 23 inside the second rotating part 12 as illustrated in FIG. 11.

Meanwhile, when the third pusher 143 raises the third battery 23, the fourth battery 24 among the plurality of batteries 2 is seated on the upper surface of the fourth pusher 144 among the plurality of pushers 14 as illustrated in FIG. 11. And, the fourth outer gripper 1114 among the plurality of outer grippers 111 grips the fourth battery 24 outside the first rotating part 11. Then, the first camera 15 photographs the fourth battery 24 to generate a first image of the fourth battery 24.

As described above, if the plurality of outer grippers 111, the plurality of inner grippers 121, and the plurality of pushers 14 are each formed in four, the plurality of outer grippers 111, the plurality of inner grippers 121, and the plurality of pushers 14 are each formed at 90° intervals based on the central axis. Therefore, when the first battery 21 descends and reaches the first rotating part 11 again and the first outer gripper 1111 grips the first battery 21 again, the second rotating part 12 rotates while the second inner gripper 1212 grips the second battery 22 and the second battery 22 reaches the position where the second camera 16 faces. That is, whenever the first rotating part 11, the second rotating part 12, the shaft 13, and the plurality of pushers 14 rotate 90°, the batteries 2 gripped by the inner gripper 121 may reach the position where the second camera 16 faces one by one.

The first image and the second image for all the batteries 2 may be generated by repeatedly performing the above process for the plurality of batteries 2. And, through the first image and the second image, the appearance inspection of all the batteries 2 may be performed. At this time, since the batteries 2 do not deviate from their correct positions, the error from the actual appearance may be reduced. Additionally, since there is no need for the plurality of batteries 2 to stop while moving, the appearance inspection of the batteries 2 may be performed quickly, thereby saving the appearance inspection time.

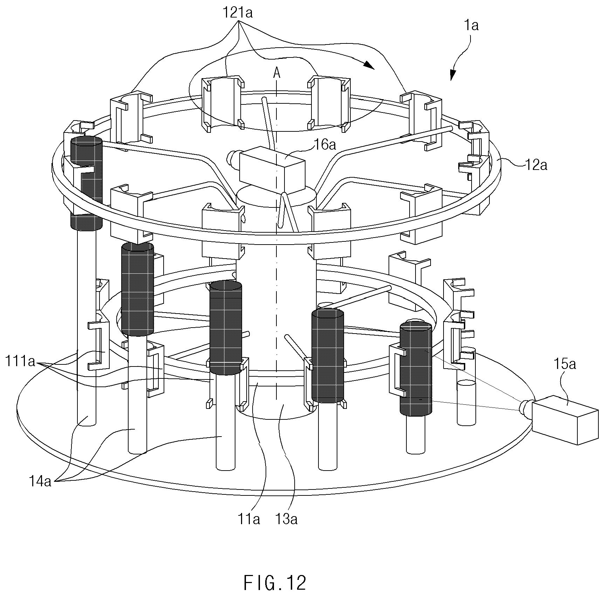

FIG. 12 is a perspective view showing a secondary battery inspection apparatus 1a according to a modified example of an embodiment of the present disclosure.

In the secondary battery inspection apparatus 1 according to an embodiment of the present disclosure, the plurality of outer grippers 111, the plurality of inner grippers 121, and the plurality of pushers 14 are described as being each formed in four. However, as described above, the number of the plurality of outer grippers 111, the plurality of inner grippers 121, and the plurality of pushers 14 may be formed in various numbers. That is, as illustrated in FIG. 12, in the secondary battery inspection apparatus 1a according to a modified example of an embodiment of the present disclosure, a plurality of outer grippers 111a, a plurality of inner grippers 121a, and a plurality of pushers 14a may be each formed in twelve.

If the plurality of outer grippers 111a, the plurality of inner grippers 121a, and the plurality of pushers 14a are each formed in twelve, the plurality of outer grippers 111a, the plurality of inner grippers 121a, and the plurality of pushers 14a are each formed at 30° intervals based on the central axis. Then, whenever the first rotating part 11a, the second rotating part 12a, the shaft 13a, and the plurality of pushers 14a rotate 30°, the plurality of outer grippers 111a may be positioned alternately with each other. And, the plurality of batteries 2 are positioned one after another in a specific area at regular intervals while moving. Therefore, whenever the first rotating part 11a, the second rotating part 12a, the shaft 13a, and the plurality of pushers 14a rotate 30°, new batteries 2 may be seated one by one on the upper surface of the pusher 14a, and one outer gripper 111a may grip the battery 2 one by one.

Additionally, whenever the first rotating part 11a, the second rotating part 12a, the shaft 13a, and the plurality of pushers 14a rotate 30°, the plurality of inner grippers 112a may be positioned alternately with each other, so that the batteries 2 may reach the second rotating part 12a one by one, and one inner gripper 121a may grip the battery 2 one by one.

Additionally, whenever the first rotating part 11a, the second rotating part 12a, the shaft 13a, and the plurality of pushers 14a rotate 30°, the batteries 2 gripped by the inner gripper 121 may reach the position where the second camera 16 faces one by one.

In this way, when the plurality of outer grippers 111a, the plurality of inner grippers 121a, and the plurality of pushers 14a are each formed in twelve, the appearance inspection process of the battery 2 may be repeatedly performed more quickly than when they are each formed in four.

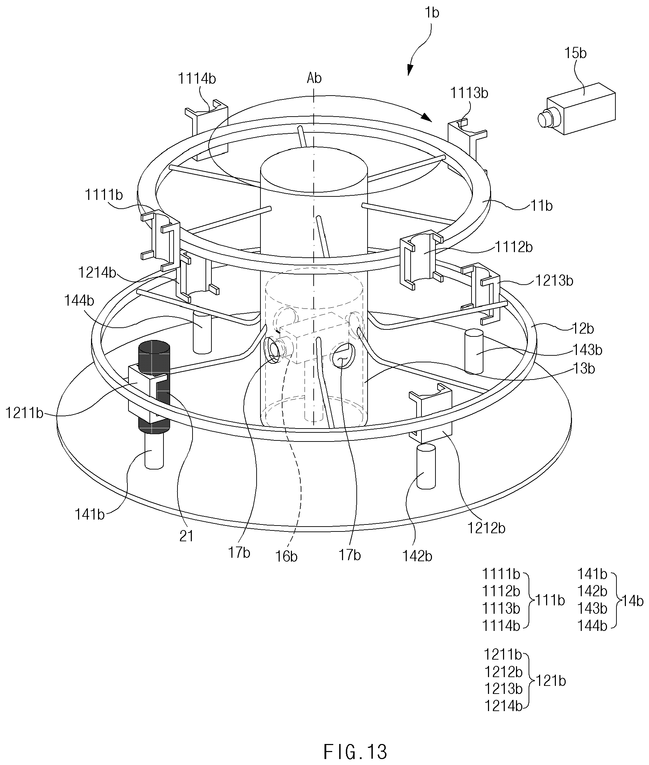

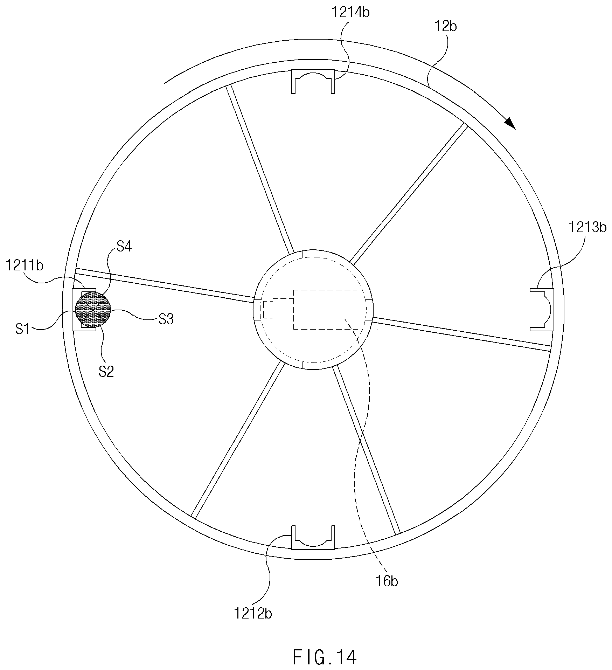

FIG. 13 is a perspective view showing the first battery 21 gripped by a first inner gripper 1211b of a second rotating part 12b in a secondary battery inspection apparatus 1b according to another embodiment of the present disclosure, and FIG. 14 is a schematic view showing the appearance of FIG. 13 from above the second rotating part 12b.

According to an embodiment of the present disclosure, the first rotating part 11 is positioned below the second rotating part 12, and the second rotating part 12 is positioned above the first rotating part 11. As a result, the first camera 15 first photographs the battery 2 gripped by the outer gripper 111 of the first rotating part 11, and then, when the battery 2 reaches the second rotating part 12, the second camera 16 photographs the battery 2 gripped by the inner gripper 121 of the second rotating part 12.

However, according to another embodiment of the present disclosure, as illustrated in FIG. 13, the first rotating part 11b is positioned above the second rotating part 12b, and the second rotating part 12b is positioned below the first rotating part 11b. And, while the inner gripper 121b formed on the second rotating part 12b grips the battery 2, the second camera 16b photographs the battery 2. Thereafter, the pusher 14b raises the battery 2, and the first camera 15b photographs the battery 2 while the outer gripper 111b formed on the first rotating part 11b grips the battery 2. As a result, the photographing of all the outer surfaces of the battery 2 may be completed.

Hereinafter, the operation of the secondary battery inspection apparatus 1b according to another embodiment of the present disclosure will be described in order with reference to each drawing. Here, the description of overlapping contents with the secondary battery inspection apparatus 1 according to an embodiment of the present disclosure will be omitted. The plurality of outer grippers 111b, the plurality of inner grippers 121b, and the plurality of pushers 14b are described as being each formed in four, but the present disclosure is not limited thereto, and if the plurality of outer grippers 111b, the plurality of inner grippers 121b, and the plurality of pushers 14b are all the same in number, they may be formed in various numbers, such as eight or twelve.

As illustrated in FIG. 13, the first battery 21 among the plurality of batteries 2 is seated on the upper surface of the first pusher 141b among the plurality of pushers 14b. And, as illustrated in FIGS. 13 and 14, the first inner gripper 1211b among the plurality of inner grippers 121b grips the first battery 21 inside the second rotating part 12b. Then, the second camera 16b photographs the first battery 21 to generate a second image of the first battery 21. FIG. 13 illustrates that the second camera 16b is disposed inside the shaft 13b, but the shaft 13b and the second camera 16b are not fixed to each other. That is, the interior of the shaft 13b is empty, so that a space in which the second camera 16b is disposed is provided, and if a separate upper cover (not shown) covers the secondary battery inspection apparatus 1b from above, the second camera 16b may be fixed to the upper cover. Therefore, while the first rotating part 11b, the second rotating part 12b, the shaft 13b, and the plurality of pushers 14b rotate around the rotation axis Ab, the second camera 16b does not rotate.

Along the outer circumferential surface of the shaft 13b, a plurality of holes 17b are formed at equal intervals for the plurality positions corresponding to the plurality of inner grippers 121b, respectively. Therefore, whenever the shaft 13b rotates and the plurality of inner grippers 121b reach the position where the second camera 16b faces one by one, the second camera 16b may photograph the batteries 2 gripped by the inner grippers 121b through the holes 17b.

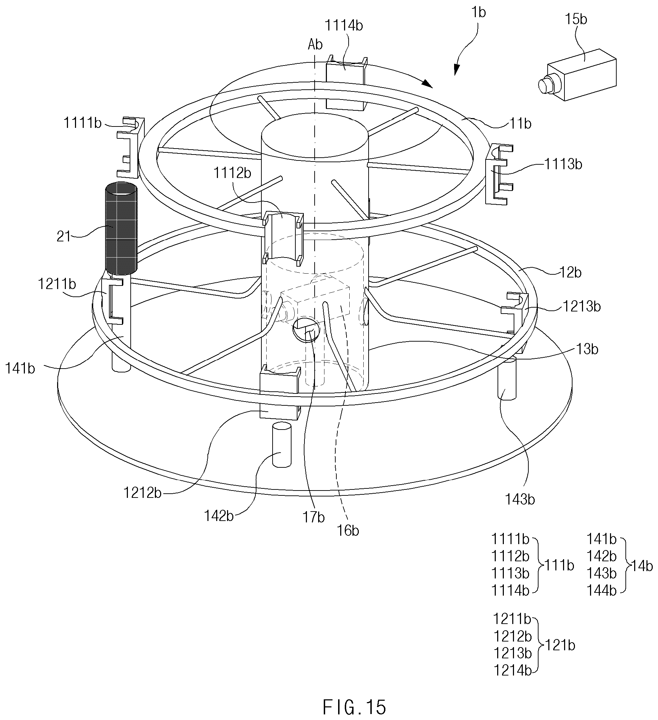

FIG. 15 is a perspective view showing a first pusher 141b raising the first battery 21 in the secondary battery inspection apparatus 1b according to another embodiment of the present disclosure.

When the second camera 16b generates the second image of the first battery 21, the first pusher 141b moves upward as illustrated in FIG. 15. And, the first pusher 141b simultaneously moves upward and rotates around the rotation axis Ab to raise the first battery 21 seated on the upper surface thereof, and the first battery 21 comes out of the first inner gripper 1211b and is raised by the first pusher 141b.

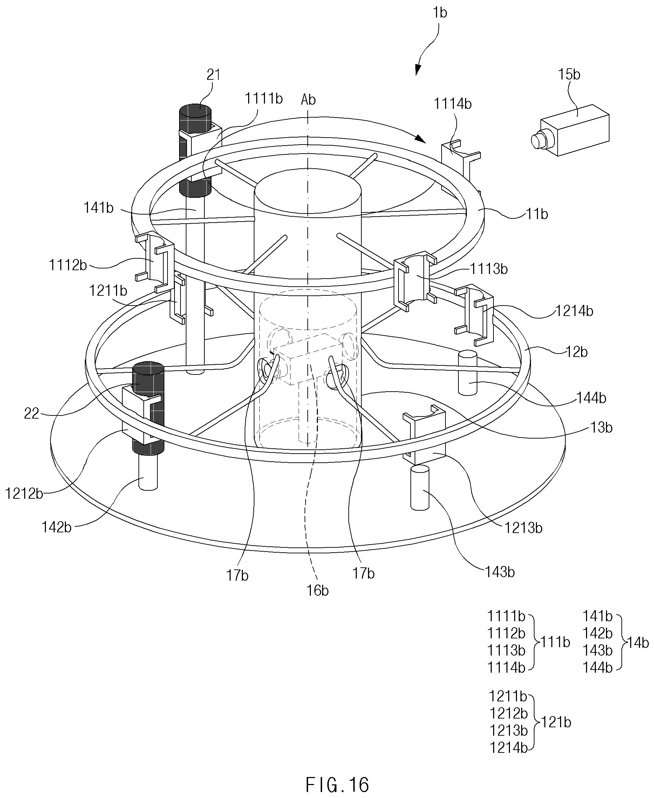

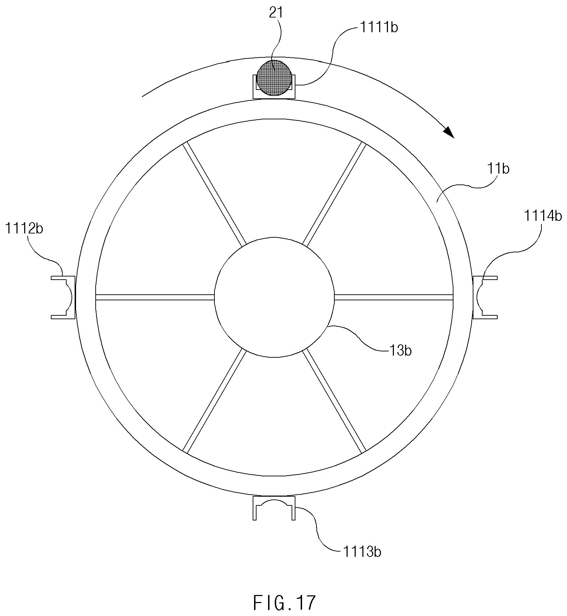

FIG. 16 is a perspective view showing the first battery 21 gripped by a first outer gripper 1111b of a first rotating part 11b in the secondary battery inspection apparatus 1b according to another embodiment of the present disclosure, and FIG. 17 is a schematic view showing the appearance of FIG. 16 from above the first rotating part 11b.

When the first pusher 141b moves upward, the first battery 21 comes out of the first inner gripper 1211b and ascends toward the first outer gripper 1111b among the plurality of outer grippers 111b. And, when the first battery 21 reaches the first rotating part 11b, the first outer gripper 1111b of the first rotating part 11b grips the first battery 21 outside the first rotating part 11b as illustrated in FIGS. 16 and 17.

Meanwhile, when the first pusher 141b raises the first battery 21, the second battery 22 among the plurality of batteries 2 is seated on the upper surface of the second pusher 142b among the plurality of pushers 14b as illustrated in FIG. 16. And, the second inner gripper 1212b among the plurality of inner grippers 121b grips the second battery 22 inside the second rotating part 12b. Then, the second camera 16b photographs the second battery 22 to generate a second image of the second battery 22.

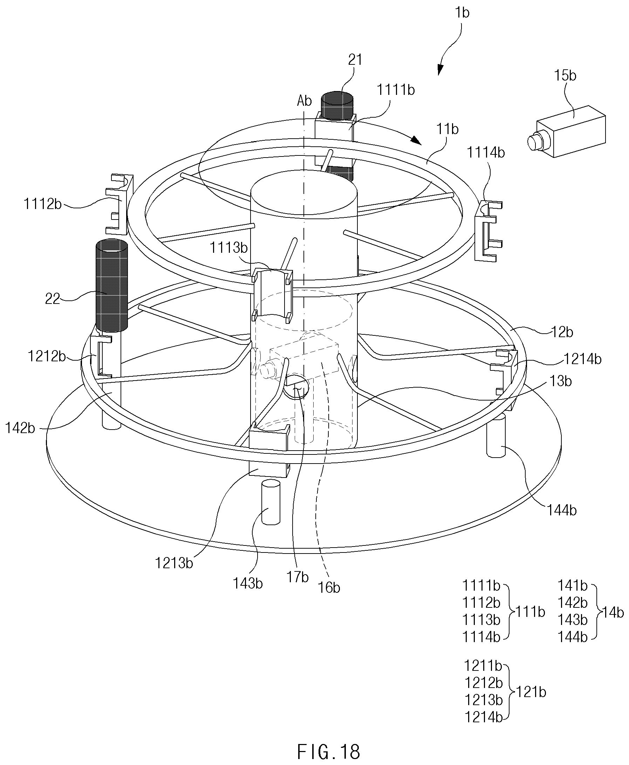

FIG. 18 is a perspective view showing the first rotating part 11b rotating while the first outer gripper 1111b grips the first battery 21 in the secondary battery inspection apparatus 1b according to another embodiment of the present disclosure.

As illustrated in FIG. 18, when the first outer gripper 1111b grips the first battery 21, the first rotating part 11b rotates until the first battery 21 reaches the position where the first camera 15b faces. At this time, the first pusher 141b does not move upward or downward, but rotates together with the first battery 21 while it is seated. Then, the first battery 21 may move toward the position where the first camera 15b faces without changing the height thereof.

Meanwhile, when the second camera 16b generates the second image of the second battery 22, the second pusher 142b moves upward as illustrated in FIG. 18. And, the second pusher 142b simultaneously moves upward and rotates around the rotation axis Ab to raise the second battery 22 seated on the upper surface thereof, and the second battery 22 comes out of the second inner gripper 1212b and is raised by the second pusher 142b.

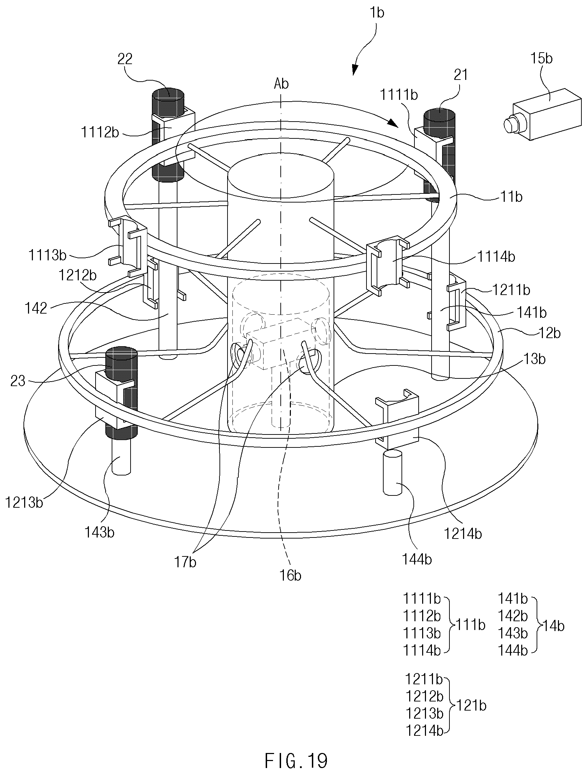

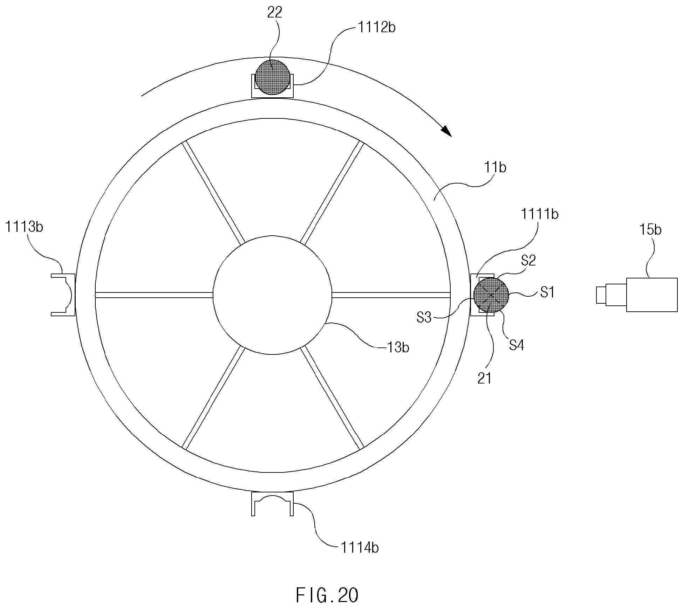

FIG. 19 is a perspective view showing the first battery 21 reaching a position where a first camera 15b faces in the secondary battery inspection apparatus 1b according to another embodiment of the present disclosure, and FIG. 20 is a schematic view showing the appearance of FIG. 19 from above the first rotating part 11b.

As illustrated in FIGS. 19 and 20, when the first rotating part 11b further rotates while the first outer gripper 1111b grips the first battery 21 and the first battery 21 reaches the position where the first camera 15b faces, the first camera 15b photographs the first battery 21 to generate a first image of the first battery 21.

When the first image and the second image of the first battery 21 are generated, the first side S1, the second side S2, the third side S3, and the fourth side S4 of the first battery 21 are all shown in the first image and the second image. Therefore, through the first image and the second image of the first battery 21, it is possible to perform an appearance inspection of all the outer surfaces of the first battery 21 and determine whether there are any defects.

Meanwhile, when the second pusher 142b moves upward, the second battery 22 comes out of the second inner gripper 1212b and ascends toward the second outer gripper 1112b among the plurality of outer grippers 111b. And, when the second battery 22 reaches the first rotating part 11b, the second outer gripper 1112b of the first rotating part 11b grips the second battery 22 outside the first rotating part 11b as illustrated in FIGS. 19 and 20.

Meanwhile, when the second pusher 142b raises the second battery 22, the third battery 23 among the plurality of batteries 2 is seated on the upper surface of the third pusher 143b among the plurality of pushers 14b as illustrated in FIG. 19. And, the third inner gripper 1213b among the plurality of inner grippers 121b grips the third battery 23 inside the second rotating part 12b. Then, the second camera 16b photographs the third battery 23 to generate a second image of the third battery 23.

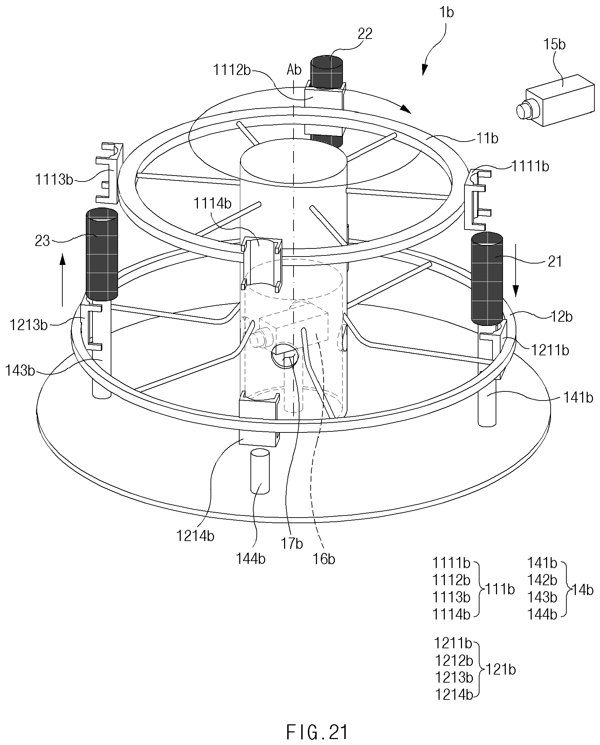

FIG. 21 is a perspective view showing the first pusher 141b lowering the first battery 21 in the secondary battery inspection apparatus 1b according to another embodiment of the present disclosure.

When the first camera 15b generates the first image of the first battery 21, the first pusher 141b moves downward as illustrated in FIG. 21. At this time, the first pusher 141b simultaneously moves downward and rotates around the rotation axis Ab to lower the first battery 21 seated on the upper surface thereof, and the first battery 21 comes out of the first outer gripper 1111b and is lowered by the pusher 14b.

Meanwhile, when the second outer gripper 1112b grips the second battery 22, the first rotating part 11b rotates until the second battery 22 reaches the position where the first camera 15b faces. At this time, the second pusher 142b does not move upward or downward, but rotates together with the second battery 22 while it is seated. Then, the second battery 22 may move toward the position where the first camera 15b faces without changing the height thereof.

Meanwhile, when the second camera 16b generates the second image of the third battery 23, the third pusher 143b moves upward as illustrated in FIG. 21. And, the third pusher 143b simultaneously moves upward and rotates around the rotation axis Ab to raise the third battery 23 seated on the upper surface thereof, and the third battery 23 comes out of the third inner gripper 1213b and is raised by the third pusher 143b.

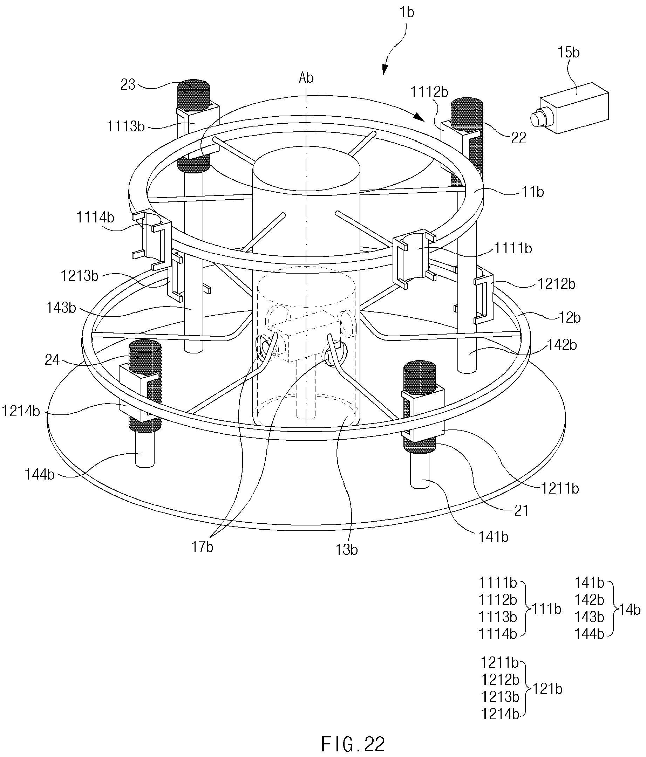

FIG. 22 is a perspective view showing the first battery 21 gripped again by the first inner gripper 1211b of the second rotating part 12b in the secondary battery inspection apparatus 1b according to another embodiment of the present disclosure.

When the first pusher 141b moves downward, the first battery 21 descends toward the first inner gripper 1211b of the second rotating part 12b as illustrated in FIG. 22. And, when the first battery 21 reaches the second rotating part 12b again, the first inner gripper 1211b grips the first battery 21 again. When the first pusher 141b moves further downward, the first battery 21 comes out of the first inner gripper 1211b again, and the appearance inspection process for the first battery 21 is completed. And, the first battery 21 is moved to the next process line. In the next process, a plurality of batteries 2 may be sorted into good or defective products depending on whether they are defective. Therefore, the first battery 21 may also be sorted into good or defective products depending on whether they are defective as determined through the first image and the second image.

Meanwhile, when the first rotating part 11b further rotates while the second outer gripper 1112b grips the second battery 22 and the second battery 22 reaches the position where the first camera 15b faces, the first camera 15b photographs the second battery 22 to generate the first image of the second battery 22.

When the first image and the second image of the second battery 22 are generated, the first side S1, the second side S2, the third side S3, and the fourth side S4 of the second battery 22 are all shown in the first image and the second image. Therefore, through the first image and the second image of the second battery 22, it is possible to perform an appearance inspection of all the outer surfaces of the second battery 22 and determine whether there are any defects.

Meanwhile, when the third pusher 143b moves upward, the third battery 23 comes out of the third inner gripper 1213b and ascends toward the third outer gripper 1113b among the plurality of outer grippers 111b. And, when the third battery 23 reaches the first rotating part 11b, the third outer gripper 1113b of the first rotating part 11b grips the third battery 23 outside the first rotating part 11b as illustrated in FIG. 22.

Meanwhile, when the third pusher 143b raises the third battery 23, the fourth battery 24 among the plurality of batteries 2 is seated on the upper surface of the fourth pusher 144b among the plurality of pushers 14b as illustrated in FIG. 22. And, the fourth inner gripper 1214b among the plurality of inner grippers 121b grips the fourth battery 24 inside the second rotating part 12b. Then, the second camera 16b photographs the fourth battery 24 to generate a second image of the fourth battery 24.

The first image and the second image for all the batteries 2 may be generated by repeatedly performing the above process for the plurality of batteries 2. And, through the first image and the second image, the appearance inspection of all the batteries 2 may be performed. At this time, since the batteries 2 do not deviate from their correct positions, the error from the actual appearance may be reduced. Additionally, since there is no need for the plurality of batteries 2 to stop while moving, the appearance inspection of the batteries 2 may be performed quickly, thereby saving the appearance inspection time.

Those having ordinary skill in the art to which the present disclosure pertains will understand that the present disclosure may be implemented in other specific forms without changing the technical idea or essential characteristics thereof. Therefore, it should be understood that the embodiments described above are exemplary and not limiting in all respects. The scope of the present disclosure is indicated by the appended claims described below rather than the detailed description above, and various embodiments derived from the meaning and scope of the claims and the equivalent concepts thereof should be construed as being included in the scope of the present disclosure.

## Claims

1. A secondary battery inspection apparatus comprising:
a first rotating part in which a plurality of outer grippers gripping a battery thereoutside are formed facing outward at equal intervals along an outer circumferential surface;
a second rotating part in which a plurality of inner grippers gripping the battery thereinside are formed facing inward at equal intervals along an inner circumferential surface;
a shaft that positions the first rotating part and the second rotating part at different heights;
a plurality of pushers that move upward and downward to raise and lower the battery;
a first camera that is positioned outside the first rotating part, faces one of the outer grippers, and photographs the battery gripped by the outer gripper to generate a first image; and
a second camera that is positioned inside the second rotating part, faces one of the inner grippers, and photographs the battery gripped by the inner gripper to generate a second image,
wherein the first rotating part, the second rotating part, and the shaft all share the same central axis, which becomes a rotation axis, and rotate around the rotation axis, and
the plurality of pushers rotate around the rotation axis together with the first rotating part, the second rotating part, and the shaft.

2. The secondary battery inspection apparatus according to claim 1,
wherein the first rotating part, the second rotating part, the shaft, and the pusher rotate at the same angular velocity.

3. The secondary battery inspection apparatus according to claim 1,
wherein the plurality of outer grippers, the plurality of inner grippers, and the plurality of pushers are all the same in number.

4. The secondary battery inspection apparatus according to claim 3,
wherein the plurality of outer grippers, the plurality of inner grippers, and the plurality of pushers all correspond to each other in positions.

5. The secondary battery inspection apparatus according to claim 1,
wherein the first rotating part is positioned below the second rotating part.

6. The secondary battery inspection apparatus according to claim 5,
wherein when a first battery among the plurality of batteries is seated on an upper surface of a first pusher among the plurality of pushers, and a first outer gripper among the plurality of outer grippers grips the first battery outside the first rotating part,
the first camera is configured to photograph the first battery to generate a first image.

7. The secondary battery inspection apparatus according to claim 6,
wherein when the first camera generates the first image of the first battery,
the first pusher is configured to rotate around the rotation axis and raises the first battery toward a first inner gripper among the plurality of inner grippers.

8. The secondary battery inspection apparatus according to claim 7,
wherein when the first inner gripper grips the first battery,
the second rotating part is configured to rotate until the first battery reaches a position where the second camera faces.

9. The secondary battery inspection apparatus according to claim 8,
wherein when the first battery reaches the position where the second camera faces,
the second camera is configured to photograph the first battery to generate a second image.

10. The secondary battery inspection apparatus according to claim 7,
wherein when the first pusher raises the first battery,
a second battery among the plurality of batteries is seated on an upper surface of a second pusher among the plurality of pushers, and a second outer gripper among the plurality of outer grippers grips the second battery.

11. The secondary battery inspection apparatus according to claim 1,
wherein the second rotating part is positioned below the first rotating part.

12. The secondary battery inspection apparatus according to claim 11,
wherein when a first battery among the plurality of batteries is seated on an upper surface of a first pusher among the plurality of pushers, and the first inner gripper among the plurality of inner grippers grips the first battery inside the second rotating part,
the second camera is configured to photograph the first battery to generate a second image.

13. The secondary battery inspection apparatus according to claim 12,
wherein when the second camera generates the second image of the first battery,
the first pusher is configured to rotate around the rotation axis and raises the first battery toward the first outer gripper among the plurality of outer grippers.

14. The secondary battery inspection apparatus according to claim 13,
wherein when the first outer gripper grips the first battery,
the first rotating part is configured to rotate until the first battery reaches a position where the first camera faces.

15. The secondary battery inspection apparatus according to claim 14,
wherein when the first battery reaches the position where the first camera faces,
the first camera is configured to photograph the first battery to generate a first image.

16. The secondary battery inspection apparatus according to claim 13,
wherein when the first pusher raises the first battery,
a second battery among the plurality of batteries is seated on an upper surface of a second pusher among the plurality of pushers, and a second inner gripper among the plurality of inner grippers grips the second battery.
